# EUROPÄISCHE PATENTSCHRIFT

(11) **EP 0 698 738 B1**
(45) Veröffentlichungstag und Bekanntmachung des Hinweises auf die Patenterteilung: **31.10.2001**
(21) Anmeldenummer: 95890140.7
(22) Anmeldetag: 26.07.1995
(51) Int. Cl.: F04C 29/10, F04B 49/22, F16K 31/122

(54) **Ansaugregelventil für Rotationsverdichter**
Suction control valve for rotary compressors
Soupape de contrôle d'aspiration pour compresseurs rotatifs

(30) Priorität: 29.07.1994 AT 150694
(43) Veröffentlichungstag der Anmeldung: 28.02.1996
(73) Patentinhaber: HOERBIGER KOMPRESSORTECHNIK SERVICES GmbH, 1040 Wien (AT)
(72) Erfinder: Kindl, Gerhard, A-1220 Wien (AT)
(74) Vertreter: Pinter, Rudolf, Dipl.-Ing.

(56) Entgegenhaltungen:
- EP-A- 0 403 829
- GB-A- 251 934
- US-A- 3 210 938
- US-A- 4 054 156

## Beschreibung

Die Erfindung bezieht sich auf ein Ansaugregelventil für Rotationsverdichter, insbesondere für Schraubenverdichter, das in die Saugleitung des Verdichters eingebaut und durch einen pneumatischen Stellantrieb betätigbar ist, dessen vom Druckmittel beaufschlagter Stellkörper, z.B. Kolben oder Membrane, das Verschlußstück des Ansaugregelventils gegen eine Befederung verstellt, die auf das Verschlußstück des Ansaugregelventils oder auf den Stellkörper des Stellantriebs wirkt.

Es ist bekannt, die Fördermenge von Verdichtern, insbesondere von Rotationsverdichtern wie Schraubenverdichtern u.dgl., dadurch zu regeln, daß der Durchgangsquerschnitt der Ansaugleitung verändert, also die angesaugte Mediumsmenge mehr oder weniger gedrosselt wird. Diese Drosselung erfolgt mit Hilfe eines Ansaugregelventils der eingangs angeführten Bauart, das in die Saugleitung des Rotationsverdichters eingebaut ist, von der Befederung in der Offenstellung gehalten wird und durch den Stellantrieb in Schließrichtung verstellt wird, der in aller Regel vom verdichteten Medium des geregelten Verdichters selbst beaufschlagt wird.

Ein Ansaugregelventil eines solchen Verdichters ist in die EP 403 829 A offenbart, von welcher der Oberbegriff des Anspruchs 1 ausgeht.

Mit dieser verhältnismäßig einfachen Anordnung ist es möglich, die Liefermenge eines Rotationsverdichters praktisch über den gesamten Förbereich stufenlos zu regeln und so dem jeweiligen Bedarf anzupassen. In der Praxis hat sich jedoch ergeben, daß mit dieser bekannten Anordnung nur ein verhältnismäßig ungenaues Regeln möglich ist und, insbesondere bei starker Drosselung der Ansaugleitung, die Regelung verhältnismäßig instabil ist, insbesondere dann, wenn der Querschnitt des Ansaugregelventils so gewählt wird, daß sich in der ganz offenen Stellung ein geringer Ventilverlust ergibt. Es hat sich gezeigt, daß ausgehend von einem offenen Ansaugregelventil dies durch den Stellantrieb über rund 80 % oder mehr seines Hubes geschlossen werden kann, ohne daß dadurch eine Drosselwirkung auch nur annähernd entsprechender Größenordnung auftritt. In diesem Bereich sind nur verhältnismäßig kleine Stellkräfte erforderlich und ist die Regelung verhältnismäßig unempfindlich und stabil. Wenn sich das Ansaugregelventil jedoch der geschlossenen Stellung nähert, ergibt sich schon bei verhältnismäßig kleiner Hubänderung eine verhältnismäßig große Änderung der Drosselwirkung. Die Regelung wird dadurch mit Annäherung an die geschlossene Stellung des Ansaugregelventils immer empfindlicher und instabiler. Kleine Änderungen des auf den Stellantrieb wirkenden Stelldruckes führen bereits zu einer verhältnismäßig großen Änderung der Drosselwirkung.

Von diesem Stand der Technik ausgehend, liegt der Erfindung die Aufgabe zugrunde, das Regelverhalten der stufenlosen Regelungen mit Ansaugregelventil zu verbessern. Insbesondere soll eine stabilere Regelung bei gleicher Regelabweichung oder kleinere Regelabweichungen bei ausreichender Stabilität, also insgesamt ein genaueres Regeln ermöglicht werden.

Mit der Erfindung wird diese Aufgabe dadurch gelöst, daß die Befederung mit über ihren Federweg unterschiedlicher Steifigkeit ausgebildet ist, wobei die Federsteifigkeit bei offenem Ansaugregelventil kleiner ist als bei sich in der Nähe der Schließstellung befindlichem Verschlußstück des Ansaugregelventils. Durch diese einfache Abänderung oder Ergänzung der Befederung werden überraschende Ergebnisse erzielt. Ausgehend vom offenen Ansaugregelventil ist die Federsteifigkeit der Befederung klein. Dadurch ist nur eine geringe Änderung des Stelldruckes erforderlich, um eine verhältnismäßig große Verstellung des Verschlußstückes in dem Bereich zu erzielen, in dem die Regelung unempfindlich ist, sowohl durch die Bauart des Ventils, als auch durch die Dimmensionierung des Ventilquerschnittes für einen geringen Ventilverlust bei ganz offenem Ventil. In der Nähe der Schließstellung des Ansaugregelventils ist dagegen die Federsteifigkeit erheblich größer, was zur Folge hat, daß in diesem Bereich die Empfindlichkeit der Regelung herabgesetzt und diese daher entsprechend stabiler ist. Aufgrund der verhältnismäßig großen Federsteifigkeit ist nämlich auch eine entsprechend große Änderung des Stelldruckes notwendig, um eine verhältnismäßig kleine Verstellung des Verschlußstückes des Ansaugregelventils und damit der erzielten Drosselwirkung zu erreichen. Die Regelung mit dem erfindungsgemäßen Ansaugregelventil zeichnet sich daher über den gesamten Regelungsbereich durch große Stabilität aus, so daß insgesamt ein besseres Regelverhalten erzielt wird als mit den herkömmlichen Ansaugregelventilen.

Die Erfindung kann sowohl bei als Ansaugregelventil verwendeten Sitzventilen als auch bei Regelklappen oder Schiebern angewendet werden. Die erfindungsgemäße Maßnahme ist überhaupt unabhängig von der Bauart des Ansaugregelventils selbst. Wesentlich ist lediglich, daß das Verschlußstück des Ansaugregelventils gegen eine Befederung verstellt wird und die Federsteifigkeit dieser Befederung in der Nähe der Schließstellung des Ansaugregelventils erheblich größer ist als in der Nähe der offenen Stellung des Ventils.

Im Rahmen der Erfindung ist eine Anzahl von Ausführungsvarianten der erfindungsgemäßen Befederung möglich. Die Befederung kann aus wenigstens einer Schraubenfeder bestehen; bei der die Steigung der Federwindungen über die Länge der Feder verschieden ist. Beim Zusammendrücken der Feder kommen dabei zuerst im wesentlichen die Federwindungen geringer Steigung zur Wirkung und legen sich bei weiterem Zusammendrücken der Feder aneinander an. Die Federsteifigkeit wird hierauf der größeren Steigung der restlichen Windungen entsprechend gleichfalls größer.

Bei einer weiteren Variante der Erfindung besteht die Befederung aus wenigstens einer Schraubenfeder, deren Windungen einen unterschiedlichen Durchmesser oder Querschnitt aufweisen. Hier kommen zuerst die Windungen mit großem Federdurchmesser und/oder kleinem Querschnitt zur Wirkung, deren Steifigkeit verhältnismäßig klein ist. Die große Steifigkeit wird bei kleinem Federdurchmesser und/oder großem Querschnitt des Federdrahtes erzielt.

Die Befederung kann auch aus einer Tellerfeder mit progressiver Federkennlinie bestehen. Es kann auch eine Tellerfeder ohne progressiver Federkennlinie verwendet werden, die dann auf einem Federteller mit wenigstens einem gegen sie vorragenden Anschlag abgestützt ist. Beim Zusammendrücken legt sich die Tellerfeder von außen nach innen fortschreitend an den Anschlag an, wodurch die wirksame Federlänge verkleinert und die Steifigkeit der Feder damit fortschreitend vergrößert wird.

Nach einer weiteren Möglichkeit besteht die Befederung aus wenigstens einer aus einem Elastomer, z.B. Gummi, hergestellten Feder mit progressiver Federkennlinie.

Eine progressive Federkennlinie wird auch erreicht, wenn die Befederung aus einer Schraubenfeder besteht, die mit einem Teil ihrer Länge in einen schraubenlinienförmigen Kanal eines Stützteils eingelegt ist, der beim Zusammendrücken der Feder einen Teil der Windungen überbrückt. Die im Kanal des Stützteils angeordneten Federwindungen legen sich dabei an den Stützteil an und werden unwirksam, wodurch insgesamt die Federsteifigkeit vergrößert wird.

Eine vorteilhafte Ausführungsform der Erfindung besteht darin, daß die Befederung aus wenigstens zwei Federn unterschiedlicher Steifigkeit besteht, die achsgleich übereinander angeordnet und kraftschlüssig miteinander verbunden sind, z.B. über einen dazwischengelegten Federteller. Auch bei dieser Ausführung kommt vom offenen Regelventil ausgehend zunächst die Feder mit der kleineren Steifigkeit zur Wirkung, während die Feder mit großer Steifigkeit erst in der Nähe der Schließstellung oder bei fast geschlossenem Ansaugregelventil in Aktion tritt.

Eine andere Ausführung einer Befederung aus wenigstens zwei achsgleich übereinander angeordneten und über wenigstens einen Federtelier kraftschlüssig miteinander verbundenen Federn unterschiedlicher Steifigkeit besteht weiterhin darin, daß für wenigstens einen Federteller ein Endanschlag am Gehäuse des Stellantriebes vorgesehen ist. Die betreffende Feder, die an diesem Federteller abgestützt ist, bleibt dann wirksam, bis der Federteller an seinem Endanschlag anliegt. Anschließend kommt dann eine Feder mit größerer Steifigkeit zur Wirkung.

Bei einer bevorzugten Ausführungsform der Erfindung ist vorgesehen, daß die Befederung aus wenigstens zwei Federn mit unterschiedlichem Durchmesser besteht, die koaxial ineinander angeordnet sind und unterschiedliche Länge aufweisen. Die Feder mit der kleineren Steifigkeit ist dabei zweckmäßig länger ausgebildet, wogegen die Feder mit großer Steifigkeit verhältnismäßig kurz ist. Beim Zusammendrücken der Feder, also bei fortschreitendem Schließen des Ansaugregelventils, kommt dann zunächst nur die Feder mit kleinerer Steifigkeit zur Wirkung. Erst in der Nähe der geschlossenen Stellung des Regelventils schlägt auch die kurze steifere Feder am Gehäuse des Stellantriebes an, so daß bei weiterer Verstellung beide Federn zusammengedrückt werden und die Federsteifigkeit der Befederung entsprechend größer wird.

Die koaxial ineinander angeordneten Federn dieser Befederung können auch die gleiche Steifigkeit besitzen, wobei die unterschiedliche Steifigkeit der Befederung selbst insgesamt dadurch erreicht wird, daß eine unterschiedliche Anzahl von Federn zur Wirkung kommt. Die Federn der Befederung können aber auch unterschiedlich große Steifigkeit aufweisen. Die erfindungsgemäße Befederung kann somit auf einfache Weise mit jeder gewünschten Charakteristik hergestellt werden.

Ein weiteres Ausführungsbeispiel der Erfindung sieht schließlich vor, daß die Befederung aus wenigstens zwei Federn mit unterschiedlichem Durchmesser besteht, die konzentrisch ineinander angeordnet sind, und daß für wenigstens eine dieser Federn ein Anschlag vorgesehen ist, der das zunächst freie Federende abstützt. Auch bei dieser Ausführung wird durch das Auftreffen des freien Federendes auf den vorgesehenen Anschlag die Federsteifigkeit der Befederung insgesamt entsprechend vergrößert.

Weitere Einzelheiten und Vorteile der Erfindung ergeben sich aus der nachfolgenden Beschreibung von Ausführungsbeispielen, die in den Zeichnungen dargestellt sind. In diese zeigen: Die Fig. 1 und 2 je ein schematisch dargestelltes Schaltbild einer Verdichteranlage mit eingebautem erfindungsgemäßem Ansaugregelventil, Fig. 3 einen axialen Längsschnitt durch eine Ausführungsform des Regelventils samt Stellantrieb, Fig. 4 einen axialen Mittelschnitt durch eine andere Ausführungsform des Stellantriebes ohne Ventil und die Fig. 5 bis 16 schließlich axiale Mittelschnitte durch verschiedene Ausführungsformen des Stellantriebes, der unter Weglassung des Ventils jeweils ausschnittsweise dargestellt ist.

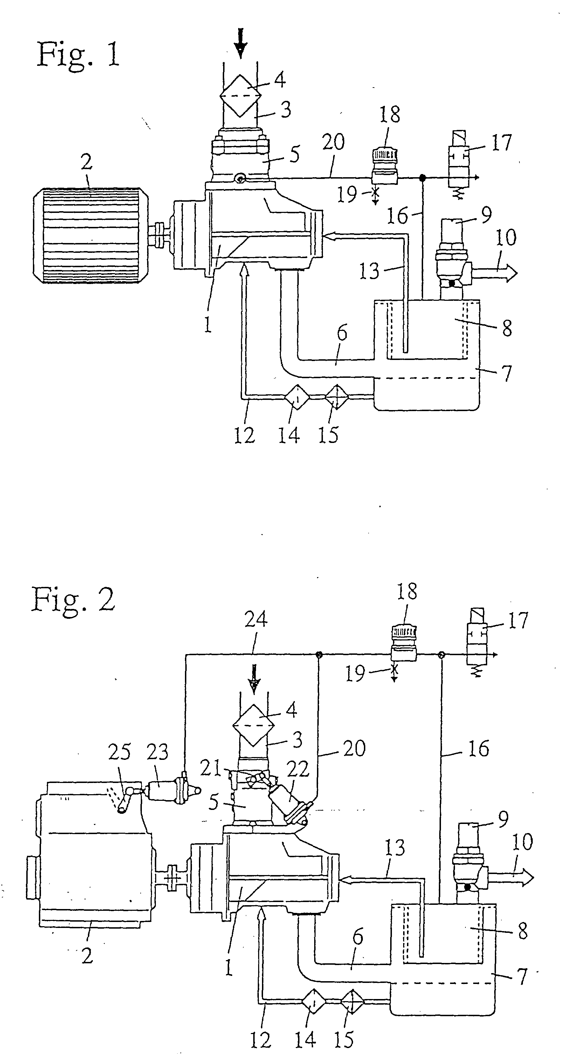

Die in den Fig. 1 und 2 gezeigten Verdichteranlagen bestehen jeweils aus einem Schraubenverdichter 1, der durch einen Motor 2 angetrieben ist. Dieser ist im Ausführungsbeispiel nach Fig. 1 ein Elektromotor und bei der Ausführung nach Fig. 2 ein Dieselmotor. Der Motor 2 ist jeweils nur schematisch angedeutet; die Stromzuführung zum Elektromotor sowie die Kraftstoffleitungen und Hilfsaggregate des Dieselmotors sind weggelassen.

In beiden Ausführungsbeispielen ist der Verdichter mit einer vergrößert dargestellten Saugleitung 3 versehen, in die ein schematisch angedeuteter Filter 4 eingebaut ist. Außerdem ist in die Ansaugleitung ein Ansaugregelventil 5 eingeschaltet, das in den Fig. 1 und 2 gleichfalls nur schematisch angedeutet ist. Vom Schraubenverdichter 1 führt eine Druckleitung 6 zu einem Druckspeicher 7, der als Ölabscheider ausgebildet ist und in dessen oberem Teil ein Feinabscheider 8 angeordnet ist. Von diesem führt über ein Mindestdruckventil 9 eine Versorgungsleitung 10 zu einem nicht dargestellten Verbraucher, z.B. in ein Druckluftnetz.

Das dargestellte Mindestdruckventil 9 enthält ein Rückschlagventil, das bei einer Druckentlastung des Druckspeichers 7 schließt und so eine gleichzeitige Druckentlastung des Verbrauchers verhindert. Das Mindestdruckventil 9 schließt auch, wenn der Druck im Verbraucher unter einen Mindestwert abfällt, um einen zu starken Druckabfall im Druckspeicher 7 zu verhindern, wodurch die Schmierung und die Kühlung des Verdichters 1 gefährdet wären. Es wird also mit dem Mindestdruckventil 9 sichergestellt, daß im Druckspeicher 7 immer ein ausreichender Mediumsdruck vorhanden ist, um eine Flüssigkeitszufuhr vom Druckspeicher 7 zu dem Schraubenverdichter 1 zu gewährleisten. Zu diesem Zweck führt aus dem unteren Teil des Druckspeichers 7 eine Flüssigkeitsleitung 12 zum Schraubenverdichter 1. Die über die Leitungen 12,13 zugeführte Flüssigkeit dient zum Abdichten, Kühlen und Schmieren des Schraubenverdichters. In die Flüssigkeitsleitung 12 sind ein Filter 14 und ein Kühler 15 eingebaut. Über eine weitere Flüssigkeitsleitung 13 wird die im Feinabscheider 8 anfallende, verhältnismäßig geringe Flüssigkeitsmenge in den Schraubenverdichter 1 zurückgeführt.

Aus den beiden Zeichnungen ist weiterhin zu erkennen, daß aus dem Druckspeicher 7 eine Steuerleitung 16 nach oben führt und sich dann verzweigt, wobei sie sowohl ein Magnetventil 17 als auch einen Proportionalregler 18 versorgt. Das Magnetventil 17 ist in herkömmlicher Weise als Leerlauf- und Entlüftungsventil ausgebildet. Der Proportionalregler 18 ist einstellbar und regelt den Druck im Druckspeicher 7. Bei steigendem Verdichterenddruck öffnet der Proportionalregler 18 und der Druck steigt in der Steuerleitung 20, die zum Ansaugregelventil 5 führt. Bei Sinken des Verdichterenddruckes schließt der Proportionalregler 18 und der Druck in der Steuerleitung 20 wird durch Abblasen über eine Ablaufdüse 19 vermindert. Das über eine weitere Steuerleitung 20 dem Ansaugregelventil 5 zugeführte Druckmedium betätigt den Stellantrieb des Ansaugregelventils 5 und bewirkt so die Regelung der Fördermenge des Schraubenverdichters 1 dem am Proportionalregler 18 eingestellten Druck entsprechend.

Im Ausführungsbeispiel nach Fig. 2 ist das Ansaugregelventil 5 als Regelklappe ausgebildet, die über einen Hebelantrieb 21 verstellt wird, für dessen Betätigung ein gleichfalls nur schematisch dargestellter Stellantrieb 22 vorgesehen ist. Ein weiterer Stellantrieb 23, der über eine Steuerleitung 24 versorgt wird, verstellt über einen Hebelantrieb 25 die nicht dargestellte Einspritzpumpe des hier als Dieselmotor ausgebildeten Antriebsmotors 2.

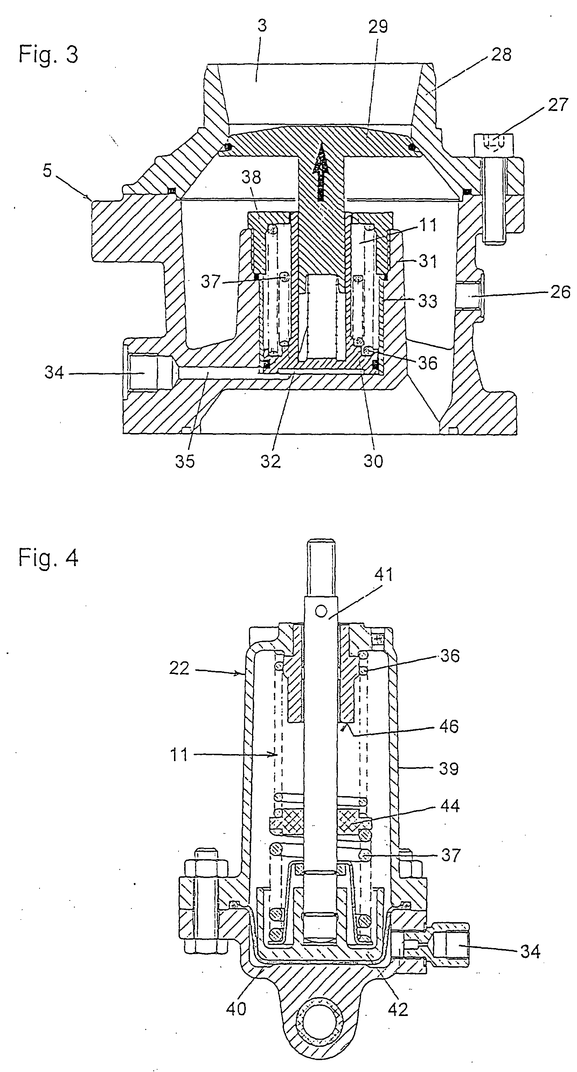

In Fig. 3 ist ein Ansaugregelventil 5 dargestellt, wie es in der Verdichteranlage nach Fig. 1 verwendet wird. Es besteht aus einem Gehäuse 26 mit einem durch Flanschschrauben 27 an ihm befestigten Deckel 28, durch den die Saugleitung 3 hindurchgeführt ist und der zugleich den Ventilsitz für das Verschlußstück 29 des Ansaugregelventils 5 bildet.

Dieses Verschlußstück 29 ist im hohl ausgebildeten Stellkörper 30 eines Stellantriebes 31 gegen die Kraft einer schwachen Feder 32 verschiebbar geführt. Der Stellkörper 30 ist als Kolben ausgebildet und in einem Zylinder 33 abgedichtet geführt. Über eine Anschlußbohrung 34, von der ein Kanal 35 in den Zylinder 33 führt, kann Druckmedium zur Verstellung des als Kolben ausgeführten Stellkörpers 30 zugeführt werden. Dieser steht unter dem Einfluß einer Befederung 11 aus zwei Rückstellfedern 36 und 37, die konzentrisch um ihn angeordnet sind.

Die beiden Rückstellfedern 36 und 37 der Befederung 11 des Stellantriebes 31 haben etwa die gleiche Querschnittsfläche und sind auch mit annähernd gleicher Steigung ausgeführt. Die äußere Feder 36 ist weniger steif als die innenliegende Feder 37 ausgeführt. Außerdem geht die Rückstellfeder 36 über den ganzen Hub des Stellantriebes durch, wogegen die innenliegende Rückstellfeder 37 kürzer ausgebildet ist.

Aus Fig. 3 ist zu erkennen, daß das Verschlußstück 29 das Ansaugregelventil 5 in der dargestellten Stellung verschlossen hält. Es handelt sich dabei um jene Lage, die das Ansaugregelventil 5 bei stillstehendem Verdichter 1 einnimmt. Das durch die schwache Feder 32 auf seinem Sitz aufliegende Verschlußstück 29 verhindert dabei, daß bei nicht arbeitendem Verdichter 1 verdichtetes Medium aus dem Druckspeicher 7 in die Saugleitung 3 zurückströmt. Sobald der Verdichter 1 aber anläuft, überwindet der Saugdruck die Kraft der schwachen Feder 32, worauf der Stellkörper 29 das Ansaugregelventil 5 öffnet.

Um das Ansaugregelventil 5 während des Betriebes des Verdichters ganz oder teilweise zu schließen und damit das Ansaugen von Medium zwecks Regelung der Liefermenge zu drosseln, wird über den Anschluß 34 und den Kanal 35 unter Druck stehendes Medium zugeführt. Dieses beaufschlagt den als Kolben ausgebildeten Stellkörper 30 und verschiebt diesen gegen die Kraft der Befederung 11, u.zw. zunächst gegen die Kraft der Rückstellfeder 36 nach oben, wobei er das Verschlußstück 29 in Richtung auf dessen Sitz mitnimmt. Da die zweite Rückstellfeder 37 zunächst noch unbelastet ist, erfordert die Verschiebung des Stellkörpers 30 einen verhältnismäßig geringen Mediumsdruck. Sobald aber die zweite Rückstellfeder 37 am oberen Ende des Deckels 38 des Stellantriebes 31 anschlägt, kommt auch sie zur Wirkung, wodurch sich die insgesamt vorhandene Steifigkeit der Befederung 11 entsprechend erhöht. Für die weitere Verstellung des Verschlußstückes 29 in der Nähe seiner Schließstellung ist daher ein erheblich größerer Druck des Druckmittels erforderlich, wodurch die Regelung entsprechend stabilisiert und genauer wird, also insgesamt ein verbessertes Regelverhalten erreicht wird.

Der beim Ausführungsbeispiel nach Fig. 2 zur Verstellung der nicht dargestellten Regelklappe verwendete Stellantrieb 22 ist in Fig. 4 dargestellt. Er weist ein Zylindergehäuse 39 mit einer darin verstellbaren Rollmembrane 40 auf, die über eine am oberen Ende herausgeführte Stange 41 über den Hebelantrieb 21 die Klappe des Ansaugregelventils 5 verstellt. Für die Verstellung der Rollmembran 40 ist auch in diesem Ausführungsbeispiel ein Druckmittelanschluß 34 vorgesehen.

Die Rollmembran 40 liegt auf einem Federteller 42 auf, der mit der Stange 41 verbunden ist und die Befederung 11 abstützt. Diese besteht aus zwei Rückstellfedern 36 und 37, die unter Zwischenschaltung eines Federtellers 44 achsgleich übereinander angeordnet sind. Beide Federn 36,37 sind mit gleichem Durchmesser ausgeführt. Die untere Rückstellfeder 37 ist jedoch aus wesentlich stärkerem Draht gewickelt als die darüber befindliche Rückstellfeder 36 und weist somit eine erheblich größere Steifigkeit auf. Wenn die Rollmembran 40 über den Anschluß 34 mit einem Druckmittel beaufschlagt wird, drückt sich zuerst die schwächere Rückstellfeder 36 zusammen, bis der Federteller 44 an einem über ihm, konzentrisch um die Stange 41 herum angeordneten Anschlag 46 auftrifft. Erst dann beginnt die steifere Rückstellfeder 27 zu wirken, so daß ab diesem Zeitpunkt - genauso wie beim Ausführungsbeispiel nach Fig. 3 - die Regelung weniger empflindlich, dafür aber stabiler wird. Dies wird für eine genauere und bessere Regelung genützt.

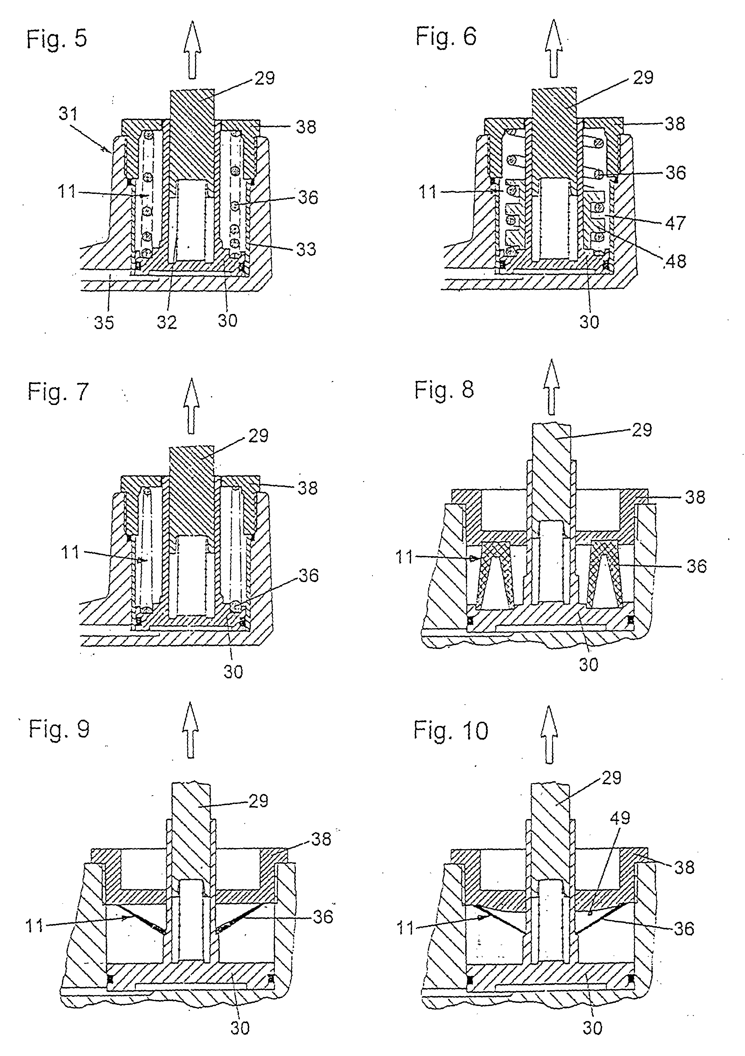

Die Fig. 5 bis 16 zeigen einige Ausführungsbeispiele von beim erfindungsgemäßen Ansaugregelventil anwendbaren Befederungen 11 mit unterschiedlicher Steifigkeit. Alle diese Ausführungsbeispiele entsprechen im wesentlichen dem in Fig. 3 dargestellten Ansaugregelventil 5, wobei in den Ausführungsbeispielen lediglich der Stellantrieb 31 mit der Befederung 11 herausgezeichnet ist. So ist in jedem Ausführungsbeispiel der Stellantrieb 31 mit einem Zylinder 33 vorgesehen, in dem der Stellkörper 30 abgedichtet geführt ist. In einem Hohlraum des Stellkörpers 30 ist der Verschlußkörper 29, von dem lediglich sein zylindrischer Führungsansatz dargestellt ist, gegen die Kraft einer schwachen Feder 32 verschiebbar. An seinem unteren Ende mündet in den Zylinder 33 der Kanal 35 für die Zuführung des Druckmediums für die Betätigung des Stellkörpers 13; an seinem oberen Ende ist der Zylinder 33 durch einen Deckel 38 abgeschlossen.

Im Ausführungsbeispiel nach Fig. 5 besteht die Befederung 11 aus einer einzigen Schraubenfeder 36, bei der die Steigung der Federwindungen über die Länge der Feder 36 verschieden ist. Bei zunehmendem Federhub legen sich die Federwindungen fortschreitend aneinander an, so daß es durch Verringerung der federnden Windungen zu einer fortschreitenden Erhöhung der Federsteifigkeit kommt.

Auch bei der Ausführung nach Fig. 6 ist nur eine einzige Schraubenfeder 36 als Befederung 11 vorgesehen. Ein Teil der Federwindungen, die mit gleicher Steigung ausgeführt sind, liegen dabei in einem schraubenlinienförmigen Kanal 47 eines Stützteils 48, der auf dem gegen die Befederung 11 verschiebbaren Stellkörper 30 aufliegt. Wenn bei dieser Ausführung der Federhub zunimmt, legen sich die im Kanal 47 des Stützteils 48 vorgesehenen Windungen aufeinanderfolgend an den Stützteil 48 an und werden dadurch ausgeschaltet. Es kommt auch dabei durch Verringerung von federnden Windungen zu einer Erhöhung der Federsteifigkeit.

Die Befederung 11 des Ausführungsbeispieles nach Fig. 7 besteht aus einer einzigen Schraubenfeder 36, deren Windungen einen unterschiedlichen Durchmesser oder Querschnitt aufweisen. Mit fortschreitendem Federhub legen sich die Federwindungen mit kleinerem Querschnitt aufeinanderfolgend aneinander, so daß es wiederum durch die Abhahme von Federwindungen zu einer laufenden Erhöhung der Federsteifigkeit kommt.

Im Ausführungsbeispiel nach Fig. 8 besteht die Befederung aus einer Feder 36, die aus einem Elastomer, z.B. Gummi, hergestellt ist und aufgrund ihrer Formgebung eine progressive Federkennlinie aufweist. Die Federsteifigkeit nimmt auch hier mit wachsendem Federhub zu.

Die Fig. 9 und 10 zeigen Ausführungsbeispiele, bei denen die Befederung 11 jeweils aus einer Tellerfeder 36 besteht. Bei der Ausführung nach Fig. 9 wird eine Tellerfeder 36 verwendet, die aufgrund ihrer Formgebung eine progressive Federkennlinie aufweist, also mit ansteigendem Federhub steifer wird. Im Ausführungsbeispiel nach Fig. 10 ist dagegen die Auflagefläche für die Feder 36 am Deckel 48 uneben, z.B. bombiert ausgeführt. Mit zunehmendem Federweg legt sich die Tellerfeder 36 fortschreitend an die Auflagefläche 49 an, wodurch es zu einer Verringerung der federnden Länge und damit zu einer Erhöhung der Federsteifigkeit kommt.

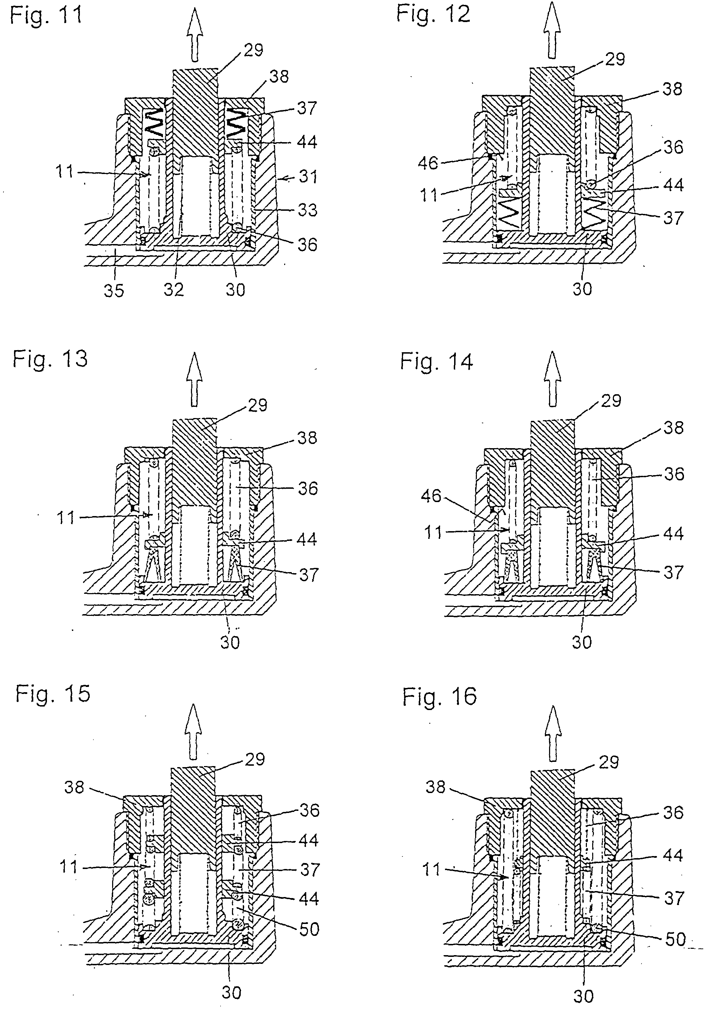

In den Fig. 11 bis 16 sind Ausführungsbeispiele dargestellt, in denen eine Befederung 11 aus mehr als einer Feder vorgesehen ist. Gemäß Fig. 11 ist auf dem Stellkörper 30 zunächst eine Schraubenfeder 36 abgestützt, über der achsgleich eine Tellerfeder 37 mit größerer Steifigkeit vorgesehen ist. Zwischen den beiden Federn ist ein Federteller 44 angeordnet. Beim Zusammendrücken dieser Befederung 11 legen sich zunächst die Windungen der weniger steifen Schraubenfeder 36 aneinander an. Anschließend kommen dann die steiferen Windungen der Tellerfeder 37 zur Wirkung.

Auch bei der Ausführung nach Fig. 12 sind eine Schraubenfeder 36 mit geringerer Steifigkeit und eine Tellerfeder 37 mit größerer Steifigkeit unter Zwischenschaltung eines Federteller 44 achsgleich übereinander angeordnet. Zusätzlich ist am Deckel 38 des Stellantriebs 31 ein Anschlag 46 für den Federteller 44 vorgesehen. Bei der Belastung dieser Befederung 11 wird zunächst die Schraubenfeder 36 zusammengedrückt, bis sich der Federteller 44 an den Anschlag 46 anlegt. Hierauf kommt die steifere Tellerfeder 37 zur Wirkung, so daß auch hier eine progressive Befederung entsteht.

Die Ausführungsbeispiele nach den Fig. 13 und 14 stimmen mit jenen nach den Fig. 11 und 12 weitgehend überein. Der Unterschied besteht darin, daß anstelle einer Tellerfeder eine aus einem Elastomer hergestellte Feder 37 mit progressiver Kennlinie vorgesehen ist. Gemäß Fig. 13 ist die aus einem Elastomer hergestellte Feder 37 achsgleich mit der Schraubenfeder 36 unter Zwischenschaltung eines Federtellers 44 vorgesehen. Fig. 14 weist die gleiche Anordnung auf, mit dem Unterschied, daß dort der Deckel 38 einen Anschlag 46 für den Federteller 44 aufweist. Die Wirkungsweise ist die gleiche wie bei den Ausführungen nach den Fig. 11 und 12.

Die Fig. 15 und 16 zeigen schließlich zwei Anordnungen, bei denen die Befederung 11 jeweils aus drei Federn besteht. Gemäß Fig. 5 sind drei Schraubenfedern 36, 37 und 50 unter Zwischenschaltung von Federtellern 44 und 44' achsgleich übereinander angeordnet. Die Federn sind aus einem Federdraht ungleichen Querschnitts hergestellt, so daß sie unterschiedliche Steifigkeit besitzen. Beim Zusammendrücken der Befederung nach Fig. 15 legen sich zunächst die Windungen der am wenigsten steifen Feder 36 aneinander an, worauf die Feder 37 zur Wirkung kommt. Wenn auch deren Windungen aneinander anliegen, tritt die Feder 50 mit der größten Steifigkeit in Aktion. Es wird so eine Befederung 11 mit mehrfach progressiver Steifigkeit erzielt.

Auch Fig. 16 zeigt eine Anordnung mit drei Federn. Die Feder 50 mit der größten Steifigkeit überbrückt hier den gesamten Federhub der Befederung, während die beiden Federn 36 und 37 mit geringerer Steifigkeit unter Zwischenschaltung eines Federtellers 44 achsgleich übereinander und konzentrisch im Inneren der Feder 37 angeordnet sind. Es ist leicht einzusehen, daß sich auch bei dieser aus drei ungleich steifen Federn bestehenden Befederung eine progressive Federwirkung ergibt.

Im Rahmen der Erfindung sind eine Vielzahl von Anordnungen mit unterschiedlich angeordneten und kombinierten Federn möglich, um die gewünschte progressiv wirkende Befederung zu erhalten. Es ist jedenfalls auf einfache Weise möglich, allen Anforderungen der Praxis durch entsprechende Kombination der Einzelfedern gerecht zu werden. Wesentlich ist jedenfalls bei allen Ausführungen, daß die Befederung bei offenem Ansaugregelventil zunächst eine verhältnismäßig kleine Steifigkeit hat und daß die Steifigkeit bei fast geschlossenem Ansaugregelventil verhältnismäßig groß ist. Auf diese Weise wird die Empfindlichkeit der Ansaugregelung im eigentlichen Regelbereich bei fast geschlossenem Ansaugregelventil herabgesetzt und dadurch die Genauigkeit der Regelung erhöht sowie insgesamt das Regelverhalten verbessert.

## Patentansprüche

1. Ansaugregelventil für Rotationsverdichter, insbesondere für Schraubenverdichter, das in die Saugleitung des Verdichters eingebaut und durch einen pneumatischen Stellantrieb verstellbar ist, dessen vom Druckmittel beaufschlagter Stellkörper, z.B. Kolben oder Membrane, das Verschlußstück des Ansaugregelventils gegen eine Befederung verstellt, die auf das Verschlußstück des Ansaugregelventils oder auf den Stellkörper des Stellantriebs wirkt, **dadurch gekennzeichnet, daß** eine Befederung (11) mit über ihren Federweg unterschiedlicher Steifigkeit vorgesehen ist, derart, daß die Federsteifigkeit bei offenem Ansaugregelventil (5) kleiner ist als bei sich in der Nähe der Schließstellung befindlichem Verschlußstück (29) des Ansaugregelventils (5).

2. Ansaugregelventil nach Anspruch 1, **dadurch gekennzeichnet, daß** die Befederung (11) aus wenigstens einer Schraubenfeder (36) besteht, bei der die Steigung der Federwindungen über die Länge der Feder (36) verschieden ist (Fig. 5).

3. Ansaugregelventil nach Anspruch 1, **dadurch gekennzeichnet, daß** die Befederung (11) aus wenigstens einer Schraubenfeder (36) besteht, deren Windungen einen unterschiedlichen Durchmesser oder Querschnitt aufweisen (Fig. 7).

4. Ansaugregelventil nach Anspruch 1, **dadurch gekennzeichnet, daß** die Befederung (11) aus einer Tellerfeder (36) mit progressiver Federkennlinie besteht (Fig. 9).

5. Ansaugregelventil nach Anspruch 1, **dadurch gekennzeichnet, daß** die Befederung (11) aus einer Tellerfeder (36) besteht, die auf einem Federteller (38) mit wenigstens einem gegen sie vorragenden Anschlag (49) abgestützt ist, an den sich die Tellerfeder (36) bei ihrem Zusammendrücken von außen nach innen fortschreitend anlegt (Fig. 10).

6. Ansaugregelventil nach Anspruch 1, **dadurch gekennzeichnet, daß** die Befederung (11) aus wenigstens einer aus einem Elastomer, z.B. Gummi, hergestellten Feder (36) mit progressiver Federkennlinie besteht (Fig. 8).

7. Ansaugregelventil nach Anspruch 1, **dadurch gekennzeichnet, daß** die Befederung (11) aus einer Schraubenfeder (36) besteht, die mit einem Teil ihrer Länge in einen schraubenlinienförmigen Kanal (47) eines Stützteils (48) eingelegt ist, der beim Zusammendrükken der Feder (36) einen Teil der Windungen überbrückt (Fig. 6).

8. Ansaugregelventil nach Anspruch 1, **dadurch gekennzeichnet, daß** die Befederung (11) aus wenigstens zwei Federn (36,37) unterschiedlicher Steifigkeit besteht, die achsgleich übereinander angeordnet und kraftschlüssig miteinander verbunden sind, z.B. über einen dazwischengelegten Federteller (44) (Fig. 4, 11, 13, 15).

9. Ansaugregelventil nach Anspruch 1, **dadurch gekennzeichnet, daß** die Befederung (11) aus wenigstens zwei achsgleich übereinander angeordneten und über wenigstens einen Federteller (44) kraftschlüssig miteinander verbundenen Federn (36,37) unterschiedlicher Steifigkeit besteht und für wenigstens einen Federteller (44) ein Endanschlag (46) am Gehäuse (38) des Stellantriebes (31) vorgesehen ist (Fig. 12, 14).

10. Ansaugregelventil nach Anspruch 1, **dadurch gekennzeichnet, daß** die Befederung (11) aus wenigstens zwei Federn (36,37) mit unterschiedlichem Durchmesser besteht, die koaxial ineinander angeordnet sind und unterschiedliche Länge aufweisen (Fig. 3, 16).

11. Ansaugregelventil nach Anspruch 1, **dadurch gekennzeichnet, daß** die Federn (36,37) der Befederung (11) unterschiedlich große Steifigkeit aufweisen.

12. Ansaugregelventil nach Anspruch 1, **dadurch gekennzeichnet, daß** die Befederung (11) aus wenigstens zwei Federn (36,37) mit unterschiedlichem Durchmesser besteht, die konzentrisch ineinander angeordnet sind, und daß für wenigstens eine dieser Federn (37) ein Anschlag vorgesehen ist, der das zunächst freie Federende abstützt (Fig. 3).

## Claims

1. A suction control valve for rotary compressors, in particular for screw-type compressors, fitted in the suction line of the compressor and displaceable by a pneumatic actuating drive, of which the actuating member, for example a piston or diaphragm, acted upon by the pressure medium, displaces the closure member of the suction control valve against a spring arrangement acting upon the closure member of the suction control valve or upon. the actuating member of the actuating drive, **characterized in that** a spring arrangement (11) with differing degrees of rigidity over the spring path thereof is provided, in such a way that the rigidity of the spring is less when the suction control valve (5) is open than when the closure member (29) of the suction control valve (5) is in the vicinity of the closed position.

2. A suction control valve according to Claim 1, **characterized in that** the spring arrangement (11) comprises at least one helical spring (36) in which the pitch of the spring coils differs over the length of the spring (36) (Fig. 5).

3. A suction control valve according to Claim 1, **characterized in that** the spring arrangement (11) comprises at least one helical spring (36), the coils of which have a differing diameter or cross-section (Fig. 7).

4. A suction control valve according to Claim 1, **characterized in that** the spring arrangement (11) comprises a cup spring (36) with a progressive spring characteristic (Fig. 9).

5. A suction control valve according to Claim 1, **characterized in that** the spring arrangement (11) comprises a cup spring (36) supported on a spring plate (38) with at least one stop (49) which projects towards the cup spring (36) and against which the cup spring (36) rests when it is compressed to an increasing extent from the outside towards the inside (Fig. 10).

6. A suction control valve according to Claim 1, **characterized in that** the spring arrangement (11) comprises at least one spring (36) produced from an elastomer, for example rubber, with a progressive spring characteristic (Fig. 8).

7. A suction control valve according to Claim 1, **characterized in that** the spring arrangement (11) comprises a helical spring (36) inserted with part of the length thereof into a helical channel (47) of a support part (48), which bridges part of the coils when the spring (36) is compressed (Fig. 6).

8. A suction control valve according to Claim 1, **characterized in that** the spring arrangement (11) comprises at least two springs (36, 37) with differing degrees of rigidity, which are arranged coaxially one above the other and are connected together with non-positive locking, for example by way of a spring plate (44) interposed therebetween (Figs. 4, 11, 13, 15).

9. A suction control valve according to Claim 1, **characterized in that** the spring arrangement (11) comprises at least two springs (36, 37) with differing degrees of rigidity, which are arranged coaxially one above the other and are connected together with non-positive locking by way of at least one spring plate (44), and an end stop (46) is provided on the housing (38) of the actuating drive (31) for at least one spring plate (44) (Figs. 12, 14).

10. A suction control valve according to Claim 1, **characterized in that** the spring arrangement (11) comprises at least two springs (36, 37) of different diameter arranged coaxially one in the other and having different lengths (Fig. 3, 16).

11. A suction control valve according to Claim 1, **characterized in that** the springs (36, 37) of the spring arrangement (11) have differing degrees of rigidity.

12. A suction control valve according to Claim 1, **characterized in that** the spring arrangement (11) comprises at least two springs (36, 37) of different diameter arranged concentrically one in the other, and a stop supporting the initially free end of the spring is provided for at least one of these springs (37) (Fig. 3).

## Revendications

1. Soupape de régulation d'aspiration pour compresseur rotatif, en particulier pour compresseur à vis, montée dans la conduite d'aspiration du compresseur et réglable par un servomoteur pneumatique, dont le corps de positionnement attaqué par un fluide sous pression, comme par exemple un piston ou une membrane, déplace l'obturateur de la soupape à l'encontre d'un système à ressorts qui agit sur l'obturateur de la soupape, ou sur le corps de positionnement du servomoteur, **caractérisée en ce qu'**il est prévu un système à ressorts (11) avec une raideur différente sur sa course de débattement, de sorte que la raideur du ressort est plus faible lorsque la soupape (5) est ouverte que lorsque l'obturateur (29) de la soupape se trouve à proximité de la position de fermeture.

2. Soupape de régulation d'aspiration selon la revendication 1, **caractérisée en ce que** le système à ressorts (11) est constitué par au moins un ressort hélicoïdal (36) dans lequel la pente des spires du ressort est différente sur la longueur du ressort (36) (figure 5).

3. Soupape de régulation d'aspiration selon la revendication 1, **caractérisée en ce que** le système à ressorts (11) est constitué par au moins un ressort hélicoïdal (36) dont les spires présentent un diamètre ou une section différent(e) (figure 7).

4. Soupape de régulation d'aspiration selon la revendication 1, **caractérisée en ce que** le système à ressorts (11) est constitué par une rondelle-ressort (36) avec une courbe caractéristique élastique progressive (figure 9).

5. Soupape de régulation d'aspiration selon la revendication 1, **caractérisée en ce que** le système à ressorts (11) est constitué par une rondelle-ressort (36) qui s'appuie sur une plaque à ressort (38) avec au moins une butée (49) dépassant dans sa direction, et contre laquelle la rondelle-ressort (36) s'applique progressivement (figure 10) de l'extérieur vers l'intérieur lors de son écrasement.

6. Soupape de régulation d'aspiration selon la revendication 1, **caractérisée en ce que** le système à ressorts (11) est constitué par au moins un ressort (36), produit en élastomère, comme par exemple du caoutchouc, avec une courbe caractéristique élastique progressive (figure 8).

7. Soupape de régulation d'aspiration selon la revendication 1, **caractérisée en ce que** le système à ressorts (11) est constitué par un ressort hélicoïdal (36) qui est logé par une partie de sa longueur dans un canal (47) de forme hélicoïdale d'une pièce de soutien (48) qui court-circuite une partie des spires lors de l'écrasement du ressort (36) (figure 6).

8. Soupape de régulation d'aspiration selon la revendication 1, **caractérisée en ce que** le système à ressorts (11) est constitué par au moins deux ressorts (36, 37) de raideur différente, agencés l'un au-dessus de l'autre et coaxialement, et reliés l'un à l'autre par coopération de forces, comme par exemple via une plaque à ressort (44) interposée (figures 4, 11, 13, 15).

9. Soupape de régulation d'aspiration selon la revendication 1, **caractérisée en ce que** le système à ressorts (11) est constitué par au moins deux ressorts (36, 37) de raideur différente, agencés l'un au-dessus de l'autre coaxialement, et reliés l'un à l'autre par coopération de forces via au moins une plaque à ressort (44), et **en ce qu'**il est prévu pour au moins une plaque à ressort (44) une butée finale (46) sur le boîtier (38) du servomoteur (31) (figures 12 et 14).

10. Soupape de régulation d'aspiration selon la revendication 1, **caractérisée en ce que** le système à ressorts (11) est constitué par au moins deux ressorts (36, 37) avec des diamètres différents, agencés axialement l'un dans l'autre et présentant des longueurs différentes (figures 3 et 16).

11. Soupape de régulation d'aspiration selon la revendication 1, **caractérisée en ce que** les ressorts (36, 37) du système à ressorts (11) présentent des raideurs d'intensité différente.

12. Soupape de régulation d'aspiration selon la revendication 1, **caractérisée en ce que** le système à ressorts (11) est constitué par au moins deux ressorts (36, 37) de diamètres différents, agencés concentriquement l'un dans l'autre, et **en ce qu'**il est prévu pour l'un au moins de ces ressorts (37) une butée qui soutient l'extrémité initialement libre du ressort (figure 3).
